# EUROPEAN PATENT APPLICATION

(11) **EP 2 924 843 A2**
(43) Date of publication of application: **30.09.2015**
(21) Application number: 15153721.4
(22) Date of filing: 03.02.2015
(51) Int. Cl.: H02J 7/00, B60L 11/18

(54) **Battery sharing system**

(30) Priority: 25.03.2014 US 201414224791
(71) Applicant: Go-Tech Energy Co., Ltd., New Taipei City 22183 (TW)
(72) Inventor: Lin, Hung-Lan, 221 New Taipei City (TW); Lee, Chun-Sho, 114 Taipei (TW)
(74) Representative: Lang, Christian

(57) **Abstract**

A battery sharing system (100) is disclosed in the present invention. The system includes a number of rechargeable battery packs (101...107), at least one charging device (201, 202) and a monitoring device (300). A portion of rechargeable battery packs are provided to users for use under a sharing mode. When one used rechargeable battery pack is in low status, the user exchanges the used rechargeable battery pack with another one of the rechargeable battery packs which is fully charged.

## Description

### FIELD OF THE INVENTION

The present invention relates to a battery system. More particularly, the present invention relates to battery sharing system which can provide healthy and fully charged rechargeable batteries by verifying a battery status.

### BACKGROUND OF THE INVENTION

With the improvement of production technology of the rechargeable battery and popularization of environmental protection and power saving in daily life, lithium rechargeable battery packs have gradually replaced traditional lead-acid batteries and become the power source for large electric vehicles or electric motorcycles. Inevitably, those rechargeable battery packs have the below operating problems: large size, high price and takes longer time to charge. Large size would cause difficulty to disassemble for repair. High price may make people hesitate to buy, and possibly have a higher chance of being stolen. Long period charging time requires electric vehicle manufacturers to provide more charging devices so that the electric vehicles or electric motorcycles can be charged when they are not in use.

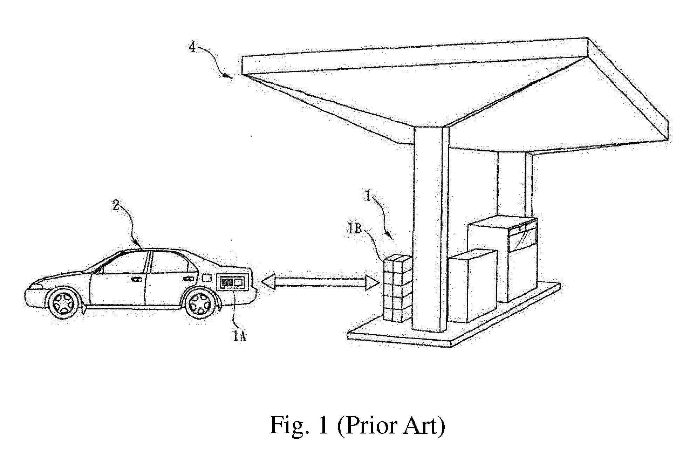

Due to the problems mentioned above, there is a concept and system of battery exchange in the electric vehicle industry. By normalizing the specifications of the rechargeable battery packs, charging interfaces of the rechargeable battery packs can be unified. It is also possible to charge the rechargeable battery pack in different time. A commonly used technique is shown in Fig. 1. A battery exchange system includes rechargeable battery packs 1, 1A and 1B (rechargeable battery pack 1B is a spare rechargeable battery pack in a rechargeable battery exchange station 4). The rechargeable battery pack 1A is installed in an electric vehicle 2 to be used until the power is too low to effectively drive the electric vehicle 2. Then, the owner of the electric vehicle 2 can exchange the rechargeable battery pack 1A with the rechargeable battery pack 1 in the rechargeable battery exchange station 4. The owner can know how much he should pay for the service of battery exchange (power charged and operation cost) from the data in the rechargeable battery exchange station 4 and pay it to the rechargeable battery exchange station 4.

The battery exchange service mentioned above can effectively settle the problem that the owner of the electric vehicle has to spend time waiting for battery charge. So is it not necessary to setup charging stations everywhere. As to the issue that the rechargeable battery pack is too heavy to move, there are some battery exchange stations where mechanical exchange devices are used to move the rechargeable battery packs instead of human beings. It can save labor cost, too. However, detailed studies on such battery exchange system reveal the troubles in operation.

First, if electric vehicles in a brand (system) have unified specification on the rechargeable battery packs that they use, the rechargeable battery packs might not able to be used by electric vehicles in other brand (system). Hence, each electric vehicle vendor still has to keep constructing new charging station to provide service. That causes waste of resources. Meanwhile, the related costs are borne by the users. Furthermore, in the current electric vehicle market, the ownership of the rechargeable battery packs is bought by the owner of the electric vehicle. When one electric vehicle owner wants to exchange his batteries with that in a battery exchange station, he would consider whether or not the rechargeable battery packs exchanged are as new and efficient as the ones he currently owns. In many cases, the exchanged rechargeable battery pack had been charged and discharged for many times. Besides, the fully charged capacity is not as high as a newly bought rechargeable battery pack. If the rechargeable battery pack is not well monitored, the exchanged rechargeable battery pack might possibly fail accidently.

In addition, services of a battery exchange station usually aim at certain kind of electric device (an electric vehicle or electric motorcycle). Some rechargeable battery packs can be applied to more than one kind of electric device without being limited to electric vehicles, for example, an electric wheelchair. In order for a battery exchange station to be able to provide batteries for different devices, corresponding services, such as loading ability, should be available for the devices as well. At least, the battery exchange station should let their customers of different devices believe that the efficiency of the received rechargeable battery packs will not be affected by the previous use on different devices. For this, a battery management system of the rechargeable battery pack should work with the battery exchange station consistently. Another problem is how to manage rechargeable battery packs of different ownership.

Therefore, in consideration of the prospects of development of the electric vehicles and the problems mentioned above, the present invention provides an innovative battery sharing system. With integrated systematic operation, the problems can be solved. It can further provide a new operating mode for the electric vehicle industry and even the rechargeable battery industry.

### SUMMARY OF THE INVENTION

There are some demands from the battery exchange stations: first, exchange of rechargeable battery packs among different electric vehicles; second, effective monitoring on exchanged rechargeable battery packs so that users can have rechargeable battery packs which are fully charged, safe and with good quality; third, an effective solution to settle any concerns on the ownership of the rechargeable battery pack for the users. The battery sharing system provided by the present invention can fulfill the demands mentioned above.

According to one aspect of the present invention, a battery sharing system, includes: a number of rechargeable battery packs, each rechargeable battery pack including: a number of rechargeable battery cell, linked to each other in series or in parallel, for providing power or storing power; and a battery managing unit, electrically connected to each rechargeable battery cell, for detecting a battery status of each rechargeable battery cell, recording a use data and transmitting the battery status and use data; at least one charging device, the charging device including: a power source, for providing power; a power transmission unit, for charging one rechargeable battery pack with power provided by the power source after receiving a charging command; and a control unit, for transceiving the battery status and use data of the rechargeable battery pack connected to the power transmission unit, and sending the charging command to the power transmission unit until the rechargeable battery pack is fully charged when the use data is below a threshold; and a monitoring device, connected to the control unit of the at least one charging device, for receiving the battery status and use data from the rechargeable battery pack connected to the at least one charging device to determine if the rechargeable battery pack can be exchanged, and controlling charging progress of the at least one charging device. A portion or all of the rechargeable battery packs are provided to a user for use under a sharing mode, when one used rechargeable battery pack is in low status, the used rechargeable battery pack is exchanged with another one of the rechargeable battery packs which is fully charged.

Preferably, the battery status is state of health, state of charge, temperature, output voltage or output current.

Preferably, the use data is charging-discharging cycle count, service time or time from full charge to use.

Preferably, the threshold is the most charging-discharging cycle count, the longest service time or the longest time from full charge to use.

Preferably, the rechargeable battery pack is exchanged when the battery status of the rechargeable battery pack during charging doesn't meet a required state of repair.

Preferably, the required state of repair is that unbalance situation among the rechargeable battery cells exceeds a default value or a capacity of one rechargeable battery cell is below the minimum operating capacity.

Preferably, the rechargeable battery pack needs maintenance and the rechargeable battery cell needs to be replaced if one rechargeable battery cell in the rechargeable battery pack has met the required state of repair.

Preferably, the charging progress is time for the charging device to process charging, amount of the rechargeable battery packs being charged at the same time, charging sequence of the rechargeable battery packs or termination of charging for maintenance.

Preferably, the sharing mode is lease, rental or purchase of the rechargeable battery pack.

Preferably, each rechargeable battery pack further comprises a battery ID, utilized by the monitoring device to store the battery status and the use data of the rechargeable battery pack.

Preferably, the user pays for the cost between the two exchanged rechargeable battery packs.

The battery sharing system provided by the present invention can effectively work and process monitoring by bringing the rechargeable battery packs into the operation of the system. It adopts a sharing mode to conduct exchange of rechargeable battery packs to achieve fast charge. Therefore, the demands above can be fulfilled.

### BRIEF DESCRIPTION OF THE DRAWINGS

Fig. 1 shows a prior art of a battery exchange system.
Fig. 2 is a block diagram of a battery sharing system according to the present invention.
Fig. 3 shows a detailed structure of a rechargeable battery pack of the battery sharing system.

### DETAILED DESCRIPTION OF THE PREFERRED EMBODIMENT

The present invention will now be described more specifically with reference to the following embodiment.

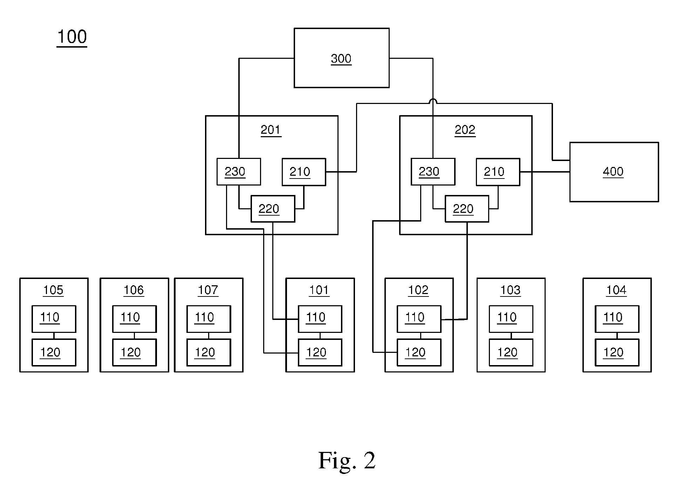

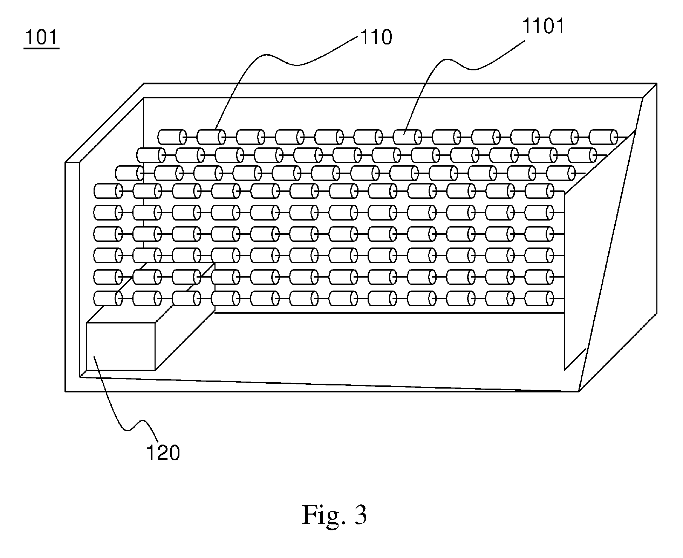

Please refer to Fig. 2 and Fig. 3. Fig. 2 is a block diagram of a battery sharing system according to the present invention. Fig. 3 shows a detailed structure of a rechargeable battery pack of the battery sharing system.

A battery sharing system 100 provided by the present invention includes seven rechargeable battery packs (a first rechargeable battery pack 101, a second rechargeable battery pack 102, a third rechargeable battery pack 103, a fourth rechargeable battery pack 104, a fifth rechargeable battery pack 105, a sixth rechargeable battery pack 106 and a seventh rechargeable battery pack 107), two charging devices (a first charging device 201 and a second charging device 202) and a monitoring device 300. According to the spirit of the present invention, the amounts of the rechargeable battery packs and the charging devices are not limited to be seven and two, respectively. It increases as the battery sharing system 100 expends without limitation. There is a minimum requirement of two for the amount of the rechargeable battery packs and one for the amount of the charging device so as to fulfill the goal of sharing.

Each rechargeable battery pack includes a rechargeable battery cell group 110 and a battery managing unit 120. As to the specification and appearance, the seven rechargeable battery packs are identical. The rechargeable battery cell group 110 includes several rechargeable battery cells 1101 linked to each other in series or in parallel. The rechargeable battery cells 1101 can provide power or store power inputted externally. Please see Fig. 3. It illustrates in details the assembly of the rechargeable battery cells 1101. Twelve rechargeable battery cells 1101 of the rechargeable battery cell group 110 are connected in series as a sub-string. Twenty-four sub-strings are connected in parallel. Of course, such combination is one of the specifications. It is not limited by the present invention for the specification of the rechargeable battery packs. Namely, the combination of the rechargeable battery cells 1101 is not limited, either.

Fig. 3 is only for illustrative purpose. Detailed electrical connection design is not shown. The battery managing unit 120 is electrically connected to each rechargeable battery cell 1101, capable of detecting a battery status and recording use data of each rechargeable battery cell 1101, and transmitting the battery status and the use data. Here, the battery status may include some or all of the information below: state of health, state of charge, temperature, output voltage or output current. The use data is charging-discharging cycle count, service time or time from full charge to use. By detecting the battery status of the rechargeable battery cell 1101, in the battery sharing system 100, real-time status of each rechargeable battery pack can be captured.

Each of the first charging device 201 and the second charging device 202 includes a power source 210, a power transmission unit 220 and a control unit 230. In the present embodiment, the power source 210 is an outlet linked to a public power grid 400 to be supplied with sufficient power to charge the rechargeable battery packs. In practice, the power source 210 can also be a generator. It depends on the demands of design. The power transmission unit 220 can charge a connected rechargeable battery pack with the power from the power source 210 after a charging command is received.

The control unit 230 is used to transceive the battery status and use data of the rechargeable battery pack connected to the power transmission unit 220. When a use data of the rechargeable battery pack is below a threshold, the control unit 230 will send the charging command to the power transmission unit 230 until the rechargeable battery pack is fully charged. The threshold is in response to the use data mentioned above and can be the most charging-discharging cycle count, the longest service time or the longest time from full charge to use. For example, the battery sharing system 100 uses the charging-discharging cycle count as the use data. The most charging-discharging cycle count is set to two hundred cycles as the threshold. Please see Fig. 2. The battery managing unit 120 of the second rechargeable battery pack 102 shows that the charging-discharging cycle count has reached two hundred cycles, the control unit 230 of the second charging device 202 will not send the charging command to the power transmission unit 220. Thus, the second rechargeable battery pack 102 will not be charged and sent to be maintained. Specific values of the most charging-discharging cycle count, the longest service time or the longest time from full charge to use can be adjusted according to different rechargeable battery packs. The value provided by the present invention is only for reference and not so limited. Similarly, other data of use status for monitoring the rechargeable battery packs can be considered as the use data.

The monitoring device 300 is connected to the control units 230 in the first charging device 201 and the second charging device 202. They receive the battery status and use data from the first rechargeable battery pack 101 connected to the first charging device 201 and the second rechargeable battery pack 102 connected to the second charging device 202. The monitoring device 300 determines if the first rechargeable battery pack 101 or the second rechargeable battery pack 102 can process exchange (it will be described in details later) and is able to control a charging progress of the first charging device 201 and the second charging device 202. Here, the charging progress for control of the charging device is a detailed term for charging to control each charging device, including but not limited to time for the charging device to process charging (e.g., charging in off-peak time), amount of the rechargeable battery packs being charged at the same time (when the second charging device 202 can be expended with the quantity of the power transmission units to charge several rechargeable battery packs at the same time), charging sequence of the rechargeable battery packs, or termination of charging for maintenance, etc. The monitoring device 300 can monitor every charging device to ensure that the rechargeable battery packs can be completely charged. The monitoring device 300 is a monitoring server. It can be remotely setup and connected to each charging device via internet. It can share the same structure with one of the charging devices to control all of the charging devices.

In operation, a portion or all of the rechargeable battery packs are provided to users by a sharing mode. The sharing mode includes lease, rental or purchase of the rechargeable battery packs. Although the user owns the device, he doesn't have to own the rechargeable battery packs. Instead, the rechargeable battery packs can be rent or bought from the owner of the battery sharing system before the device can be installed with the rechargeable battery packs. The rechargeable battery packs which are not provided to the users by the sharing mode can be reserved for spare or replacement. Of course, the sharing mode is not limited to the preceding three, and any mode for temporarily or permanently marketable use of the rechargeable battery packs is within the scope of the sharing mode provided by the present invention. There are two advantages: first, the user can choose a thrift way to buy the device without the cost of the rechargeable battery pack; second, the rechargeable battery pack which the user gets is monitored by the battery sharing system. If the user buys the rechargeable battery pack, he also buys the service of exchange of rechargeable battery packs with good quality. Please refer to Fig. 2. The fifth rechargeable battery pack 105 is leased to user A for use on an electric bicycle (not shown). The sixth rechargeable battery pack 106 and the seventh rechargeable battery pack 107 are sold to user B and linked in parallel on an electric vehicle (not shown). The use of the rechargeable battery pack is not limited in the present invention. No matter it is directly use or through an auxiliary equipment, as long as the user's device can use the rechargeable battery packs, it is workable to provide exchange of rechargeable battery packs among different electric devices.

As to exchange of rechargeable battery pack, it should follow certain rules. When battery status from one rechargeable battery pack doesn't meet a required state of repair of the rechargeable battery cell 1101 during charging, it is allowed to be exchanged. The required state of repair is that unbalance situation among rechargeable battery cells 1101 exceeds a default value, or capacity of one rechargeable battery cell 1101 is below the minimum operating capacity. It can be any other specific condition for safety consideration. Those data can be available from the battery managing unit 120. For example, if difference between the state of charge of the rechargeable battery cells 1101 is greater than a default value, 5%, during charging of the first rechargeable battery pack 101, then the first rechargeable battery pack 101 is determined to exceed the required state of repair and can not be used for exchange. In addition, it needs maintenance and the rechargeable battery cell 1101 should be replaced.

When user A's fifth rechargeable battery pack 105 is in a low status, user A can take the fifth rechargeable battery pack 105 to the battery sharing system 100 to exchange it with a fully charged rechargeable battery pack. There are four rechargeable battery packs in the battery sharing system 100 yet provided to users. The first rechargeable battery pack 101 is under charge. The second rechargeable battery pack 102 needs to be taken from the second charging device 202 for repair since the charging-discharging cycle count has reached two hundred cycles. The third rechargeable battery pack 103 is fully charged and can be exchanged. The fourth rechargeable battery pack 104 is waiting to be charged. Therefore, user A can exchange the fifth rechargeable battery pack 105 with the third rechargeable battery pack 103. The fifth rechargeable battery pack 105 comes after the fourth rechargeable battery pack 104 to be charged. Due to exchange of rechargeable battery packs user A should at least pay for the cost between the two exchanged rechargeable battery packs.

Furthermore, each rechargeable battery pack can have a battery ID. The monitoring device 300 uses the battery ID to store the battery status and use data in the corresponding rechargeable battery pack. For example, the battery ID of the first rechargeable battery pack 101 is GOT001, the battery ID of the second rechargeable battery pack 102 is GOT002, the battery ID of the third rechargeable battery pack 103 is GOT003, the battery ID of the fourth rechargeable battery pack 104 is GOT004, the battery ID of the fifth rechargeable battery pack 105 is GOT005, the battery ID of the sixth rechargeable battery pack 106 is GOT006, and the battery ID of the of the seventh rechargeable battery pack 107 is GOT007. The monitoring device 300 records that GOT001 to GOT004 are in the warehouse. GOT005 is leased to user A. GOT006 and GOT007 are sold to user B. Since in the record of the monitoring device 300, all battery IDs link to corresponding battery status and use data, all rechargeable battery packs can be well managed and monitored.

The most important spirit of the battery sharing system of the present invention is that one who owns and operates the system must take the rechargeable battery packs as a part of the system. In conventional battery exchange stations, every user of the conventional battery exchange station use their own rechargeable battery pack for exchange. Users exchange the exhausted rechargeable battery pack with a fully charged rechargeable battery pack from the battery exchange station. They can not know the efficiency of the rechargeable battery pack they get. The situation is even worse if a rechargeable battery pack is from another battery exchange system and has not been monitored, because the condition of the rechargeable battery pack exchanged might be very bad and may be a burden to the battery exchange station. However, the rechargeable battery packs in the battery sharing system according to the present invention belong to the system itself. Operation of all rechargeable battery packs is under control and monitor by the mechanism mentioned above. Thus, it is able to make sure that the users get rechargeable battery packs which are fully charged and with health condition above certain level. While the invention has been described in terms of what is presently considered to be the most practical and preferred embodiment, it is to be understood that the invention needs not be limited to the disclosed embodiment. On the contrary, it is intended to cover various modifications and similar arrangements included within the spirit and scope of the appended claims, which are to be accorded with the broadest interpretation so as to encompass all such modifications and similar structures.

## Claims

1. A battery sharing system (100) including a plurality of rechargeable battery packs (101, 102, 103, 104, 105, 106, 107), each rechargeable battery pack (101, 102, 103, 104, 105, 106, 107) has a rechargeable battery cell group (110), including a plurality of rechargeable battery cells (1101), linked to each other in series or in parallel for providing power or storing power, **characterized in that** each rechargeable battery pack (101, 102, 103, 104, 105, 106, 107) has a battery managing unit (120), electrically connected to each rechargeable battery cell (1101), for detecting a battery status of each rechargeable battery cell (1101), recording a use data and transmitting the battery status and use data; and the battery sharing system (100) comprising:
at least one charging device (201, 202), each of the charging device (201, 202) comprising:
a power source (210), for providing power;
a power transmission unit (220), for charging one rechargeable battery pack (101, 102) with power provided by the power source (210) after receiving a charging command; and
a control unit (230), for transceiving the battery status and use data of the rechargeable battery pack (101, 102) connected to the power transmission unit (220), and sending the charging command to the power transmission unit (220) until the rechargeable battery pack (101, 102) is fully charged when the use data is below a threshold; and
a monitoring device (300), connected to the control unit (230) of the at least one charging device (201, 202), for receiving the battery status and use data from the rechargeable battery pack (101, 102) connected to the at least one charging device (201, 202) to determine if the rechargeable battery pack (101, 102) can be exchanged, and controlling charging progress of the at least one charging device (201, 202),
wherein a portion or all of the rechargeable battery packs (101, 102, 103, 104, 105, 106, 107) are provided to a user for use under a sharing mode, when one used rechargeable battery pack is in low status, the used rechargeable battery pack is exchanged with another one of the rechargeable battery packs (101, 102, 103, 104, 105, 106, 107) which is fully charged.

2. The battery sharing system (100) according to claim 1, wherein the battery status comprises state of health, state of charge, temperature, output voltage or output current.

3. The battery sharing system (100) according to claim 1, wherein the use data comprises charging-discharging cycle count, service time or time from full charge to use.

4. The battery sharing system (100) according to claim 3, wherein the threshold comprises the most charging-discharging cycle count, the longest service time or the longest time from full charge to use.

5. The battery sharing system (100) according to claim 1, wherein the rechargeable battery pack (101, 102, 103, 104, 105, 106, 107) is exchanged when the battery status of the rechargeable battery pack during charging doesn't meet a required state of repair.

6. The battery sharing system (100) according to claim 5, wherein the required state of repair comprises unbalance situation among the rechargeable battery cells (1101) exceeds a default value or a capacity of one rechargeable battery cell (1101) is below the minimum operating capacity.

7. The battery sharing system (100) according to claim 5, wherein the rechargeable battery pack (101, 102, 103, 104, 105, 106, 107) needs maintenance and the rechargeable battery cell (1101) needs to be replaced if one rechargeable battery cell (1101) in the rechargeable battery pack (101, 102, 103, 104, 105, 106, 107) has met the required state of repair.

8. The battery sharing system (100) according to claim 1, wherein the charging progress comprises time for the charging device (201, 202) to process charging, amount of the rechargeable battery packs (101, 102, 103, 104, 105, 106, 107) being charged at the same time, charging sequence of the rechargeable battery packs (101, 102, 103, 104, 105, 106, 107) or termination of charging for maintenance.

9. The battery sharing system (100) according to claim 1, wherein the sharing mode comprises lease, rental or purchase of the rechargeable battery pack (101, 102, 103, 104, 105, 106, 107).

10. The battery sharing system (100) according to claim 1, wherein each rechargeable battery pack (101, 102, 103, 104, 105, 106, 107) further comprises a battery ID, utilized by the monitoring device (300) to store the battery status and the use data of the rechargeable battery pack (101, 102, 103, 104, 105, 106, 107).

11. The battery sharing system (100) according to claim 1, wherein the user pays for the cost between the two exchanged rechargeable battery packs (101, 102, 103, 104, 105, 106, 107).
